# EUROPEAN PATENT SPECIFICATION

(11) **EP 3 855 028 B1**
(45) Date of publication and mention of the grant of the patent: **06.08.2025**
(21) Application number: 21152821.1
(22) Date of filing: 21.01.2021
(51) Int. Cl.: F16B 25/00, F16B 25/10

(54) **SCREW**
SCHRAUBE
VIS

(30) Priority: 22.01.2020 TW 109102598
(43) Date of publication of application: 28.07.2021
(73) Proprietor: Chao, Ying-Chin, Kaohsiung City (TW)
(72) Inventor: Chao, Ying-Chin, Kaohsiung City (TW)
(74) Representative: Zimmermann, Tankred Klaus

(56) References cited:
- EP-A1- 0 535 193
- WO-A1-2016/180661
- CN-U- 203 067 465
- DE-U1- 202018 003 790
- GB-A- 1 479 600
- US-A- 3 982 464
- US-A- 4 258 607
- US-A- 4 778 319
- US-A1- 2009 162 165
- US-A1- 2010 183 400
- US-B2- 7 699 569

## Description

The disclosure relates to a fastener device, and more particularly to a screw.

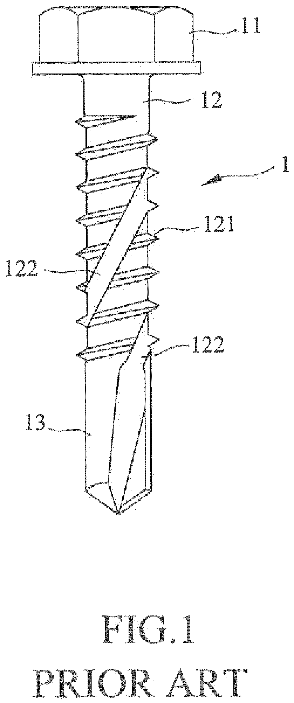

As shown in Figure 1, a conventional screw 1 includes a head 11, a shank 12 axially extending from the screw head 11, a leading end 13 connecting the shank 12 oppositely to the screw head 11. A thread 121 extends helically around the shank 12. Two flutes 122 are indented inwardly and inclinedly into the shank 12 and the leading end 13. One of the flutes 122 criss-crosses with an upper part of the thread 121 around the shank 12. The other one of the flutes 122 criss-crosses with a part of the thread 121 in proximity to the leading end 13.

When the leading end 13 is advanced into a workpiece, a thread hole of the workpiece is formed, and the scraps of the workpiece are discharged through the flutes 122. As such, the scraps are prevented from adversely affecting the drilling operation of the conventional screw 1.

However, when the conventional screw 1 is advanced into a composite workpiece, the scraps may be accumulated in the flutes 122 to reduce the cutting efficiency of the leading end 13. Therefore, torsional force required for continued advancing operation of the the conventional screw 1 is increased. Overly large torsional forces may cause cracks to the composite workpiece. The document DE 20 2018 003790 U discloses a further example of a prior art screw.

Therefore, an object of the disclosure is to provide a screw that can efficiently collect and discharge scraps so that it can be driven into a workpiece with less torsional forces.

The invention is set out in the appended set of claims.

According to the disclosure, a screw includes a head, a shank, and at least one collecting groove.

The shank extends axially and downwardly from the head, and includes a leading end opposite to the head, and a thread unit extending helically around an axis of the shank.

The at least one collecting groove is disposed on the shank between the leading end and the head for collecting scraps and does not criss-crosses with crests of the thread unit.

Other features and advantages of the disclosure will become apparent in the following detailed description of the embodiments with reference to the accompanying drawings, of which:
Figure 1 is a side view illustrating a conventional screw;
Figure 2 is a side view illustrating a screw according to a first embodiment of the disclosure;
Figure 3 is a partly sectional view illustrate the screw of the first embodiment being advanced into a composite workpiece;
Figure 4 is a side view illustrating a variant of the first embodiment;
Figures 4-1 to 4-12 illustrate other variants of the first embodiment;
Figures 5 to 7 illustrate still other variants of the first embodiment;
Figure 8 is a side view illustrating a screw according to a second embodiment of the disclosure;
Figure 9 is a sectional view taken along line IX-IX from Figure 8;
Figure 10 is a fragmentary side view illustrating a screw according to a third embodiment of the disclosure;
Figure 11 is a fragmentary side view illustrating a screw according to a fourth embodiment of the disclosure;
Figure 12 is a fragmentary side view illustrating a variant of the fourth embodiment;
Figure 13 is a fragmentary side view illustrating a screw according to a fifth embodiment of the disclosure;
Figure 14 is a fragmentary side view illustrating a screw according to a sixth embodiment of the disclosure;
Figure 15 is a fragmentary side view illustrating a screw according to a seventh embodiment of the disclosure;
Figure 16 is a fragmentary side view illustrating a screw according to an eighth embodiment of the disclosure;
Figure 17 is a side view illustrating a screw according to a ninth embodiment of the disclosure;
Figure 18 is a side view illustrating a screw according to a tenth embodiment of the disclosure;
Figure 19 is a side view illustrating a screw according to an eleventh embodiment of the disclosure;
Figure 20 is a side view illustrating a variant of the eleventh embodiment;
Figure 21 is a side view illustrating a screw according to a twelfth embodiment of the disclosure; and
Figure 22 is a side view illustrating a screw according to a thirteenth embodiment of the disclosure.

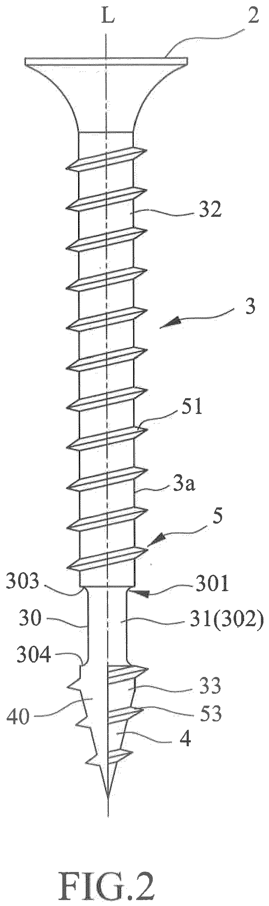

Only figures 2 and 3, 5, 14 and 15 show embodiments of the invention.

Before the disclosure is described in greater detail, it should be noted that where considered appropriate, reference numerals or terminal portions of reference numerals have been repeated among the figures to indicate corresponding or analogous elements, which may optionally have similar characteristics.

Figure 2 illustrates a screw according to a first embodiment of the disclosure. The screw includes a head 2, a shank 3 extending axially from the head 2 and including a leading end 4, and a thread unit 5 extending helically around an axis (L) of the shank 3.

The shank 3 includes a grooved section 31, an upper section 32, and a lower section 33. The grooved section 31 extends circumferentially above the leading end 4 and has a collecting groove 30 indented inwardly and radially of the shank 3. The collecting groove 30 is disposed around the axis (L) of the shank 3 in a non-helical fashion above the lower section 33 for collecting scraps, and does not criss-cross with crests of the thread unit 5. In this embodiment, the collecting groove 30 extends continuously around the axis (L) of the shank 3 by an angle of 360 degrees.

The upper section 32 is disposed between the grooved section 31 and the head 2. The lower section 33 is disposed below the grooved section 31 and has the leading end 4 and a flute 40. The collecting groove 30 extends non-helically above the flute 40, and has a groove open end 30 that faces in a radially outwards direction, a groove bottom wall 302 opposite to the groove open end 301, and an upper groove boundary wall 303 that extends from an upper end of the groove bottom wall 302 to the groove open end 301 and that extends around the axis (L) of the shank 3 in a non-helical manner. A lower groove boundary wall 304 extends from a lower end of the groove bottom wall 302 to the groove open end 301 and also extends around the axis (L) of the shank 3 in a non-helical manner.

The thread unit 5 includes an upper thread 51 formed in the upper section 32, and a lower thread 53 formed in the lower section 33. The shank 3 has a portion with a circumferential surface 3a having the largest diameter of the shank 3 except the crest diameter of the thread unit 5. The groove bottom wall 302 of the collecting groove 30 is deeper in a radial direction than the circumferential surface 3a when measured from crests of the thread unit 5. In this embodiment, the upper thread 51 is a straight thread, and the lower thread 53 is a tapered thread. The root diameter of the upper thread 51 is the largest diameter of the shank 3 except the crest diameter of the upper thread 51, and the circumferential surface 3a is the surface where the root of the upper thread 51 is situated. The maximum root diameter of the tapered lower thread 53 is also the largest diameter of the shank 3 except the crest diameter of the upper thread 51 or the maximum crest diameter of the tapered lower thread 53. Thus, the circumferential surface 3a can also be the surface where the maximum root diameter of the tapered lower thread 53 is situated. The groove bottom wall 302 is deeper than the circumferential surface 3a. Note that the grooved section 31 is more proximate to the leading end 4 than the head 2.

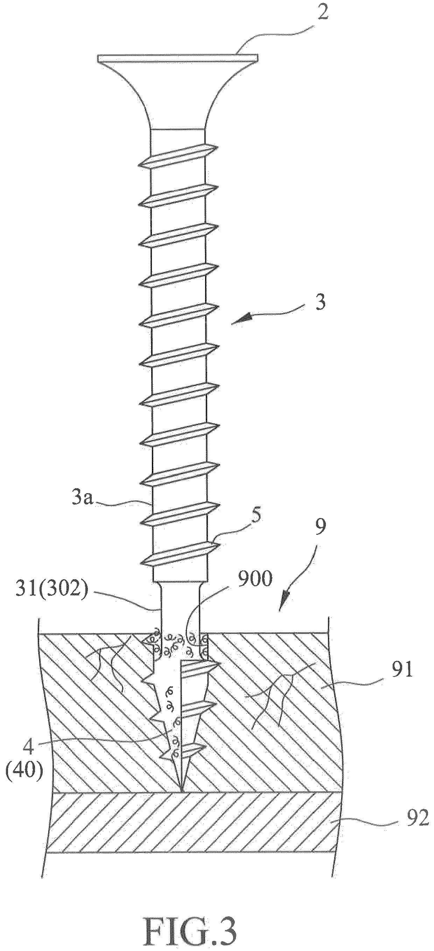

Based on a thickness of a working piece 9 (see Figure 3), the axial length of the collecting groove 30 can be varied to achieve an optimum result. However, the axial length of the collecting groove 30 should be limited not to exceed the thickness of the workpiece 9.

The flute 40 of the lower section 33 extends in parallel with the axis (L) of the shank 3 and communicates with the collecting groove 30. To be more effective for collection of the scraps, an indented depth of the collecting groove 30 from the circumferential surface 3a can be enlarged as desired as long as the depth will not harm the torsional strength of the shank 3. In addition, the bottom of the flute 40 may be a curved recess, or a recess with right angled or non-right angled corners.

As shown in Figure 3, the workpiece 9 is composed of a wood plate 91 and a metal plate 92 stacked on each other. When the leading end 4 is advanced to the metal plate 92 through the wood plate 91, because the flute 40 communicates with the collecting groove 30, a large amount of the scraps from the wood plate 91 are collected in the collecting groove 30, so that the scraps are not seriously accumulated in the flute and/or helical groove. As such, the cutting edge of the leading end 4 or the thread unit 5 will not get stuck or buried in scraps. This effect is advantageous to advance further the leading end 4 into the metal plate 92, which is harder than the wood plate 91. During drilling operation, the leading end 4 of the lower section 33 and the thread unit 5 form a drilled hole 900 in the workpiece 9. The drilled hole 900 has a hole diameter greater than a diametrical width of the grooved section 31. Therefore, the collecting groove 30 is sufficient to collect the scraps. Moreover, because the hole diameter of the drilled hole 900 is greater than the diametrical width of the grooved section 31, the groove bottom wall 302 of the collecting groove 30 is not in contact with a hole boundary of the drilled hole 900. Therefore, during the drilling operation, frictional resistance can be lowered and torsional forces required for driving the screw of the disclosure can be reduced.

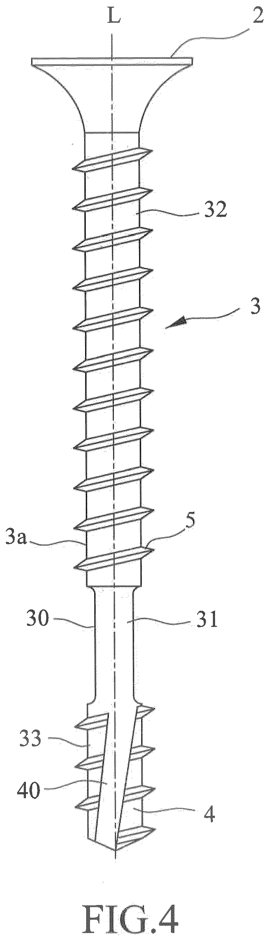

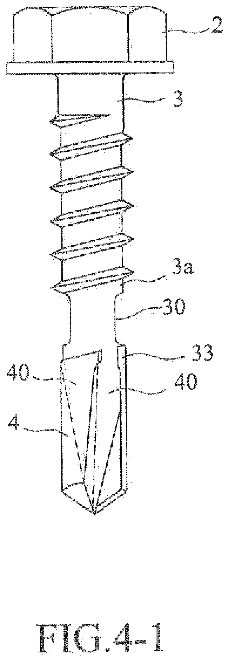

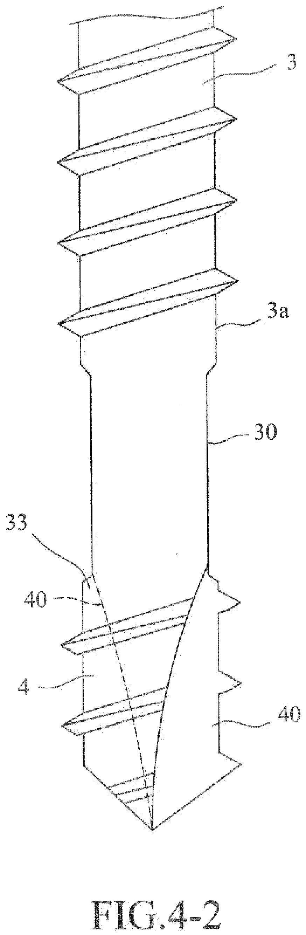

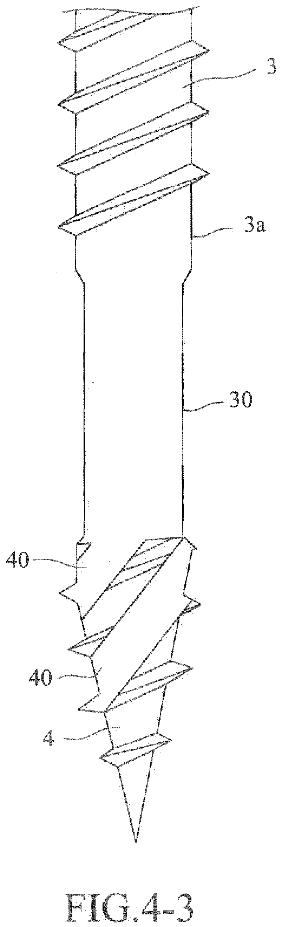

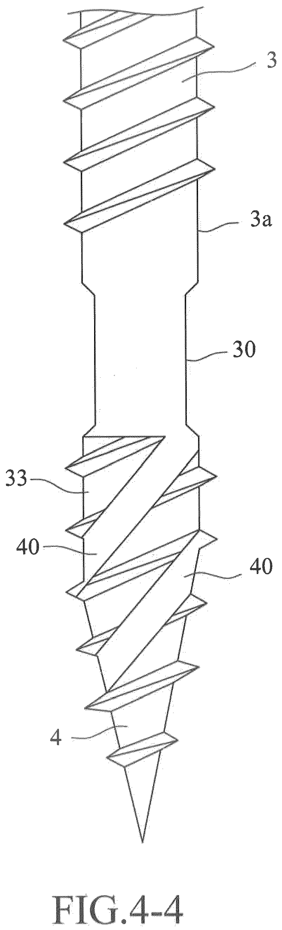

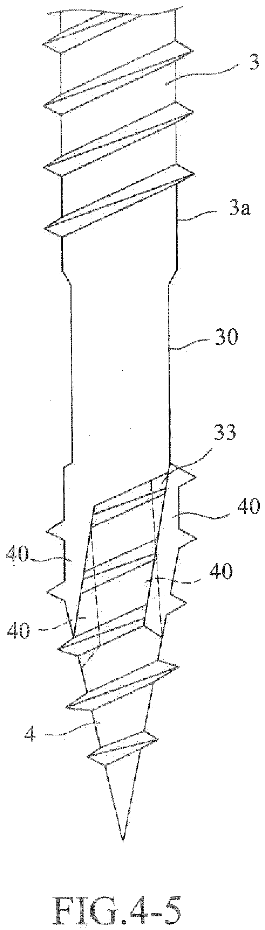

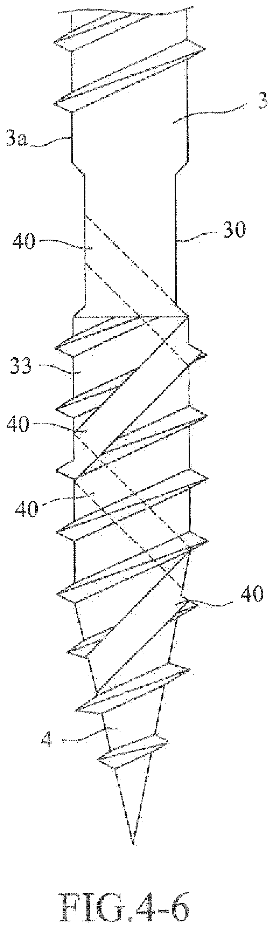

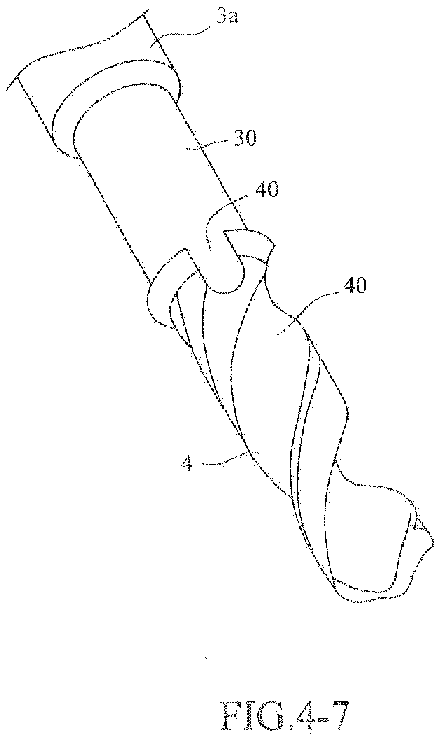

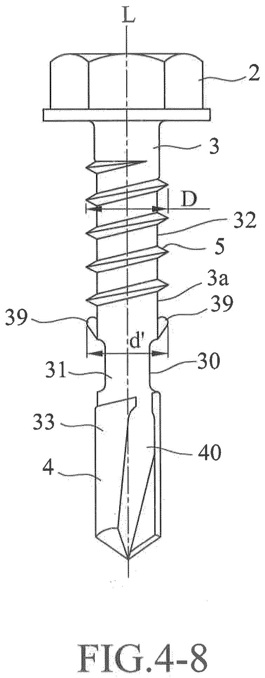

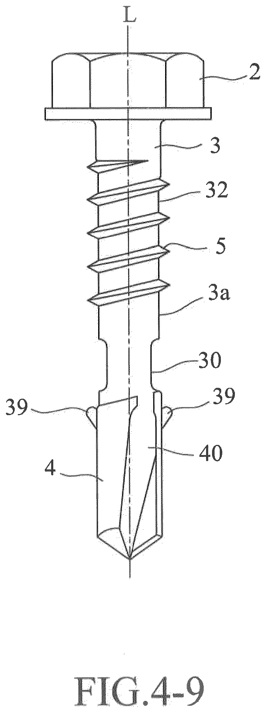

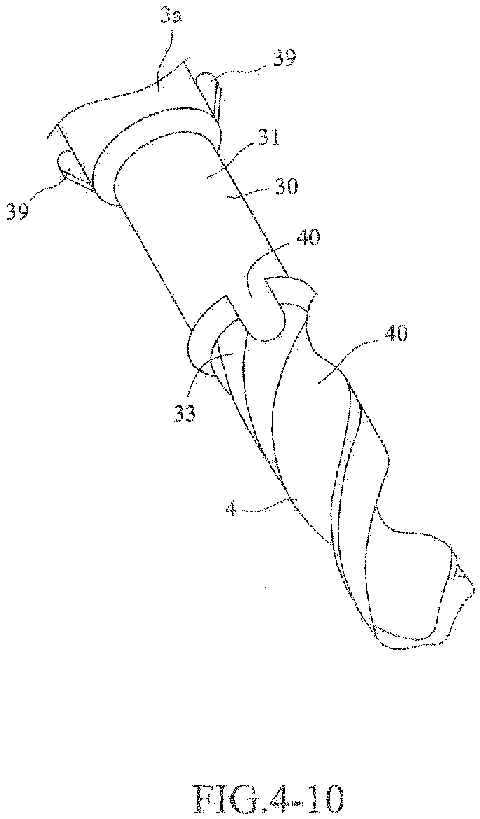

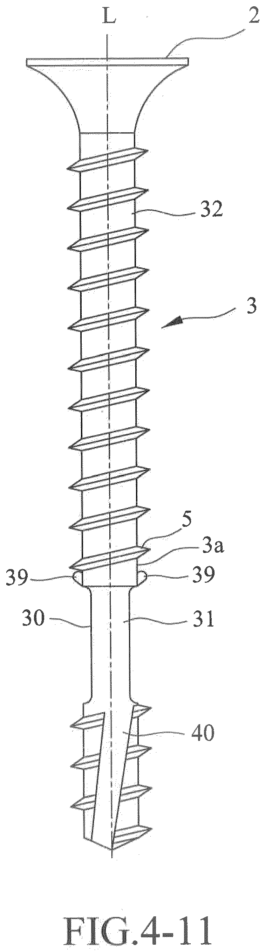

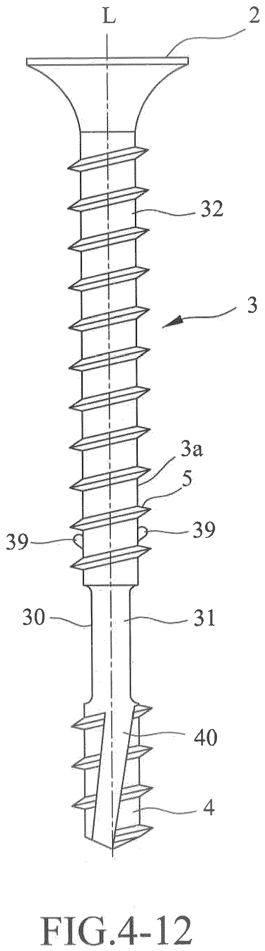

Figure 4 illustrates a variant of the first embodiment, which differs from that shown in Figure 2 in that the flute 40 of the lower section 33 extends inclinedly relative to the axis (L) of the shank 3. This variant facilitates effective discharge of the scraps from the flute 40 into the collecting groove 30.

Figures 4-1 to 4-12 illustrate other variants of the first embodiment.

As shown in Figures 4-1 and 4-2, the lower section 33 includes two flutes 40 that are symmetrically disposed in a spaced apart manner on two opposite sides of the axis (L) of the shank 3 and that communicate with the collecting groove 30.

As shown in Figure 4-3, the lower section 33 includes two flutes 40 axially extending in a spaced-apart manner on a side of the axis (L) of the shank 3. The flutes 40 both communicate with the collecting groove 30.

As shown in Figure 4-4, the lower section 33 includes two flutes 40 axially extending in a spaced apart manner on a side of the axis (L) of the shank 3, but only one of the flutes 40 communicates with the collecting groove 30.

As shown in Figure 4-5, the lower section 33 includes two flutes 40 angularly spaced apart from each other, disposed symmetrically at two opposite sides of the axis (L) of the shank, and communicating with the collecting groove (30).

As shown in Figure 4-6, the lower section 33 includes a single one flute 40 that extends helically relative to the axis (L) of the shank 3 and that communicates with the collecting groove 30.

As shown in Figure 4-7, the lower section 33 includes two flutes 40. One of the flutes 40 extends in parallel with the axis (L) of the shank 3 and communicates with the collecting groove 30. The other one of the flutes 40 extends helically relative to the axis (L) of the shank 3 and does not communicate with the collecting groove 30.

As shown in Figure 4-8, the shank 3 further includes two fins 39 that are disposed between the collecting groove 30 and the thread unit 5 formed in the upper section 32 above the collecting groove 30. The fins 39 extend from the circumferential surface 3a in opposite directions. A diametral distance (d') between the extremities of the fins 39 is smaller than a major diameter (D) of the thread unit 5.

As shown in Figure 4-9, the shank 3 further includes two fins 39 that are disposed between the leading end 4 and the collecting groove 30. The fins 39 extend in opposite directions with respect to the axis (L) of the shank 3.

As shown in Figures 4-10 and 4-11, the shank 3 further includes two fins 39 disposed between the collecting groove 30 and the thread unit 5 formed above the collecting groove 30. The fins 39 extend from the circumferential surface 3a in opposite directions.

As shown in Figure 4-12, the shank 3 further includes two fins 39 disposed between two consecutive crests of the thread unit 5 and extending from the circumferential surface 3a in opposite directions.

Noticeably, the leading end 4 of the lower section 33 may have any one of tapping or drilling end configurations and is not limited to the tapping or drilling configurations in the disclosure. The number of the flutes 40 formed in the lower section 33 and the number of the flutes 40 in communication with the collecting groove 30 are not limited to those disclosed herein. In use, the fins 39 facilitate hole enlargement operation.

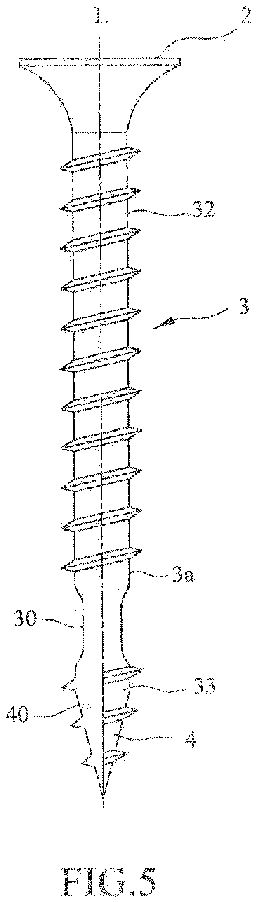

Figure 5 illustrates another variant of the first embodiment. While the collecting groove 30 as shown in Figure 2 is indented inwardly in a stepped manner by lathing, milling, cutting, grinding and rolling, the collecting groove 30 in this variant is indented gradually and inwardly by forging, rolling, twisting, stamping, and lathe trimming.

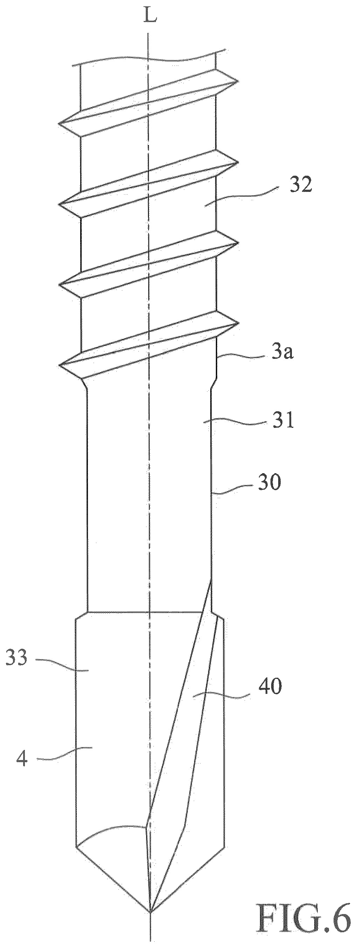

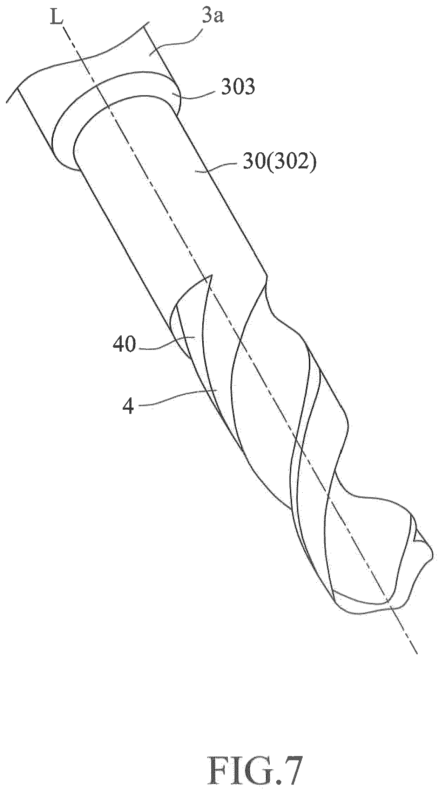

Figures 6 and 7 illustrate two other additional variants of the first embodiment. To save processing and manufacturing cost, the flute 40 and the collecting groove 30 are formed so as to be in direct communication with each other by forging, grinding, rolling twisting, stamping, lathe trimming, and cutting. Particularly, the flute 40 of the lower section 33 extends inclinedly or helically relative to an axis (L) of the shank 3 and communicates directly with the collecting groove 30. In Figure 7, the groove bottom wall 302 of the collecting groove 30 is flush with the outer surface of the leading end 4. Thus, the collecting groove 30 has only the upper groove boundary wall 303, and no lower groove boundary wall is formed for the collecting groove 30.

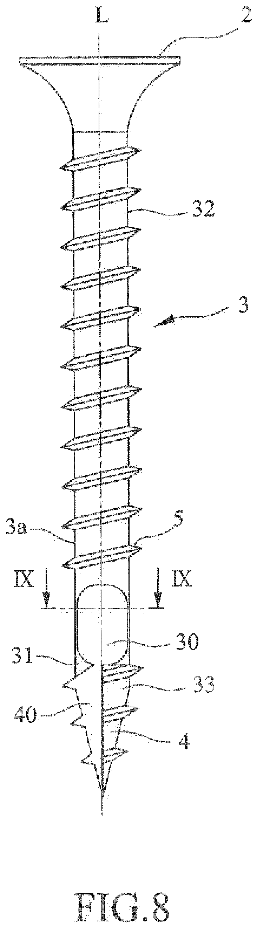

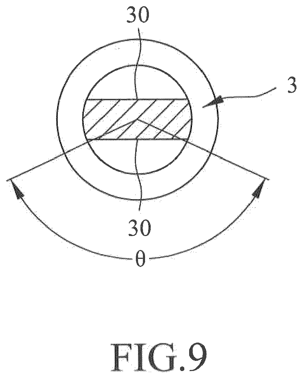

Figures 8 and 9 illustrate a screw according to a second embodiment of the disclosure. The differences between the first and second embodiments resides in that the screw includes two collecting grooves 30 (only one shown in Figure 8). The collecting grooves 30 are spaced apart circumferentially and non-helically around the axis (L) of the shank 3 by an equiangular distance. An angular length (θ) of each collecting groove 30 ranges between 90 and 360 degrees. In this embodiment, the angular length (θ) of each collecting groove 30 is larger than 90, but smaller than 180 degrees. Each collecting groove 30 has a cross sectional shape that resembles a shape of a circular segment and that is formed on a cross sectional plane perpendicular to the axis (L) of the shank 3. The non-hollow part of the grooved section 31 of the shank 3 thus has a four-sided cross section defined by two opposite arcs and two opposite chords. In other variants of this embodiment, three or more collecting grooves 30 are formed circumferentially around the axis (L) of the shank 3 at equiangular interval. Each collecting groove 30 of this embodiment has a receiving space with a volume smaller that that of the collecting groove 30 of the first embodiment. However, the entire structural strength can be enhanced to meet other requirements.

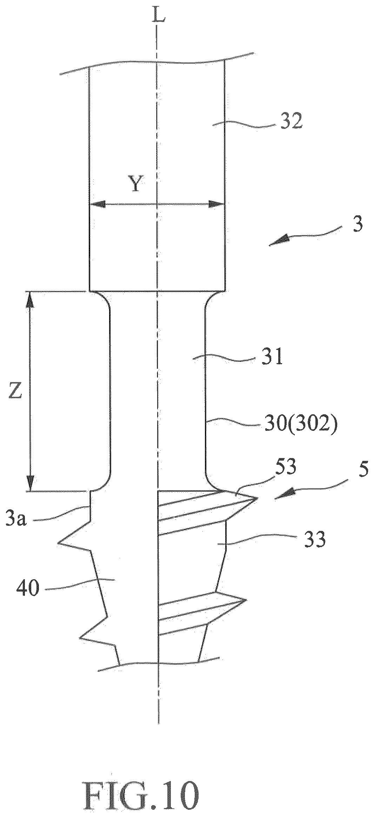

Figure 10 illustrates a screw according to a third embodiment of the disclosure. The difference between the first and third embodiments resides in that the thread unit 5 has only the lower thread 53 disposed at the lower section 33. The groove bottom wall 302 is deeper than the circumferential surface 3a with a diameter which is the largest except the maximum crest diameter of the tapered lower thread 53. In use, the torsional force required for driving the screw can be effectively reduced through the collecting groove 30, and the lower thread 53 is mainly used for screwing into the workpiece. Under condition that only a low pulling force is required, the lower thread 53 at the lower section 33 is sufficient to secure the workpiece. In this embodiment, the axial length (Z) of the collecting groove 30 is greater than or equal to a root diameter (Y) of the upper section 32, so that the volume of collecting groove 30 is assuredly sufficient for collection of the scraps.

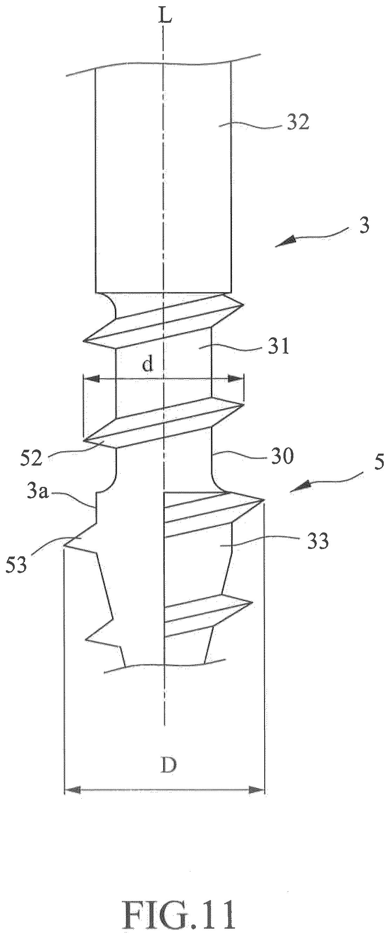

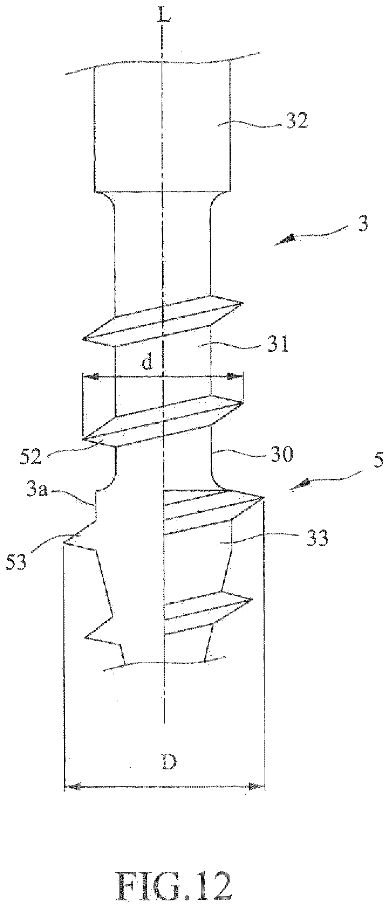

Figures 11 and 12 illustrate a screw according to a fourth embodiment of the disclosure, which has a structure generally similar to that of the third embodiment. However, in this embodiment, the thread unit 5 further has an auxiliary thread 52 disposed at the grooved section 31. The auxiliary thread 52 has a major diameter (d) smaller than a maximum major diameter (D) of the lower thread 53 which is tapered . In use, not only the scraps can be accumulated in the collecting groove 30, the auxiliary thread 52 can provide an additional capturing force to secure the workpiece and to increase a pulling strength of the screw of the embodiment. While the auxiliary thread 52 as shown in Figure 11 is distributed in full length of the grooved section 31, it is not limited thereto. For example, the auxiliary thread 52 as shown in Figure 12 is distributed in one half the axial length of the grooved section 31.

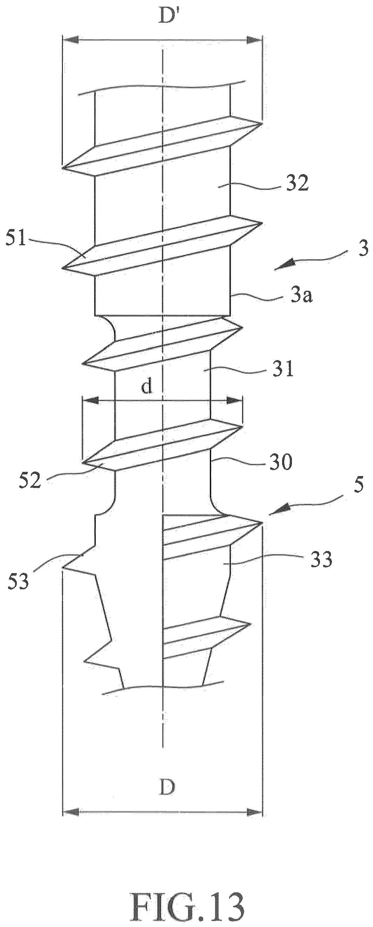

Figure 13 illustrates a screw according to a fifth embodiment of the disclosure, which has a structure generally similar to that of the fourth embodiment. However, in this embodiment, the thread unit 5 further has the upper thread 51 formed at the upper section 32. The major diameter (d) of the auxiliary thread 52 smaller than a major diameter (D') of the upper thread 51. In addition, the auxiliary thread 52 has a root diameter smaller than that of the upper thread 51. As the screw of the disclosure is driven more deeply into a workpiece, the upper thread 51 can enhance the pulling force of the screw and optimize the locking force thereof.

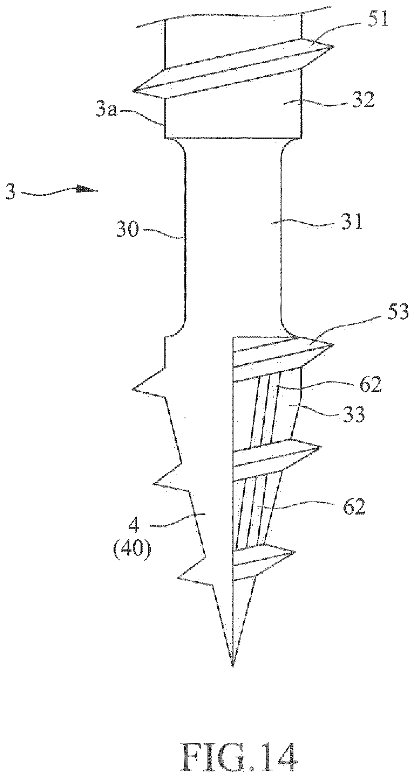

Figure 14 illustrates a screw according to a sixth embodiment of the disclosure. The difference between the sixth and first embodiments resides in that the sixth embodiment further includes ribs 62 protruding outwardly from the lower section 33 and extending transversely between two consecutive crests of the lower thread 53 formed in the lower section 33. As the lower thread 53 is screwed in, it provides a hole-enlarging effect along with its hole-forming action, thereby reducing resistance against advancement of the shank 3, as well as a subsequent cutting range. Therefore, less effort is required for the screwing movement. Specifically, because the rib 62 are disposed in the lower section 33 and produces the hole enlargement effect, a clearance can be formed between the upper section 32 and the workipiece to provide an extra space for collecting scraps. In this embodiment, the flute 40 of the lower section 33 extends across the consecutive crests of the lower thread 53 and directly adjoins the collecting groove 30. Thus, an axial length of the flute 40 is greater than that of the ribs 62. Noteworthy, to produce the hole enlargement effect, the ribs 62 are not limited to be disposed only on the lower section 33.

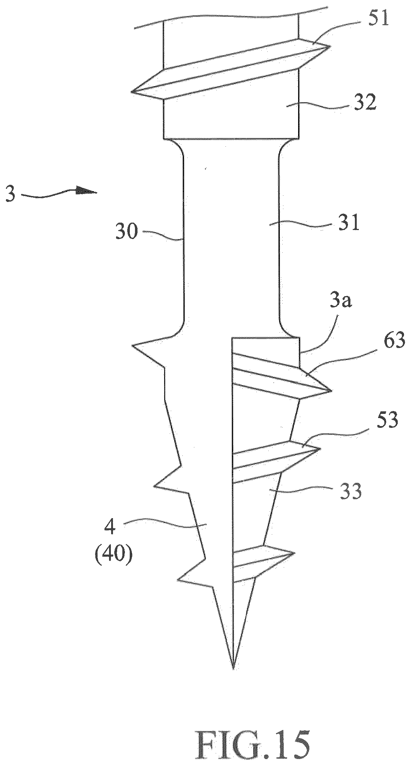

Figure 15 illustrates a screw according to a seventh embodiment of the disclosure. The difference from the first embodiment resides in that the seven embodiment includes a reverse thread 63 formed on the lower section 33 and extending spirally in a reverse direction that is opposite to the direction of the lower thread 53 of the thread unit 5. The reverse thread 63 functions to produce a hole enlargement effect. In this embodiment, the flute 40 of the lower section 33 extends through the reverse thread 63 and connects the collecting groove 30. While the reverse thread 63 of this embodiment is disposed on the lower section 33, it is not limited hereto and the number of the reverse thread 63 may be varied.

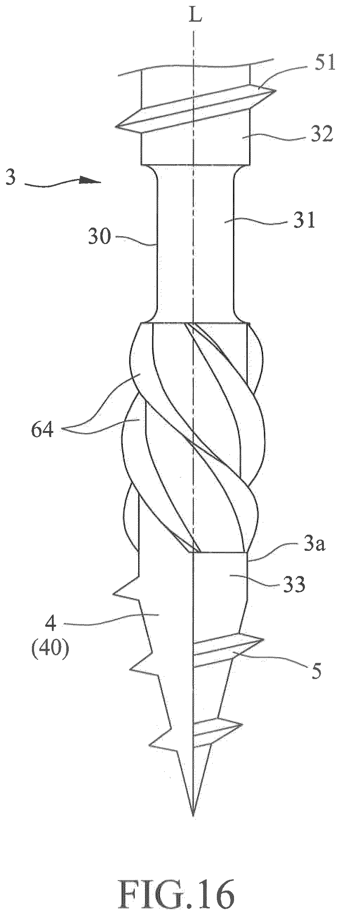

Figure 16 illustrates a screw according to an eighth embodiment of the disclosure. The difference of the eighth embodiment from the first embodiment resides in that the eighth embodiment includes multi-start short turn threads 64 formed in the lower section 33 and arranged spirally around the axis (L) of the shrank 3. The multi-start short turn threads 64 are disposed between the flute 40 of the lower section 33 and the collecting groove 30 to produce the hole enlargement effect. In some variants of this embodiment, the flute 40 may extend across the multi-start threads 63 to be in communication with the collecting groove 30.

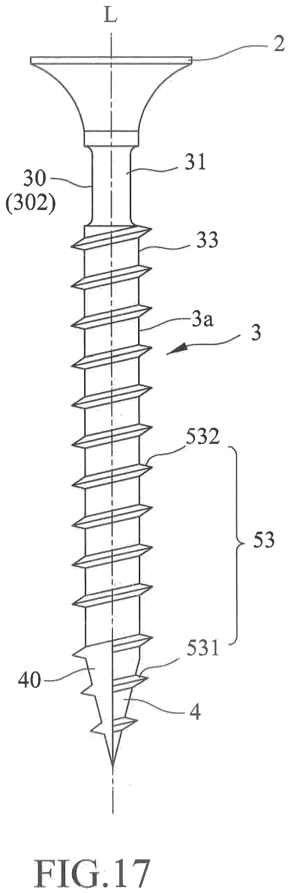

Figure 17 illustrates a screw according to a ninth embodiment of the disclosure. The difference of the ninth embodiment from the first embodiment resides in that the grooved section 31 is more proximate to the head 2 than the leading end 4. The lower thread 53 formed in the lower section 33 includes a tapered thread portion 531 formed in the leading end 4 and a straight thread portion 532 formed above the tapered thread portion 531. The groove bottom wall 302 is deeper than the circumferential surface 3a having the root diameter of the straight thread portion 532 of the lower thread 53, which is the largest except the crest diameter of the straight thread portion 532. The flute 40 extends across the tapered thread portion 531 of the lower thread 53. Note that the collecting groove 30 is more proximate to the head 2 than the leading end 4.

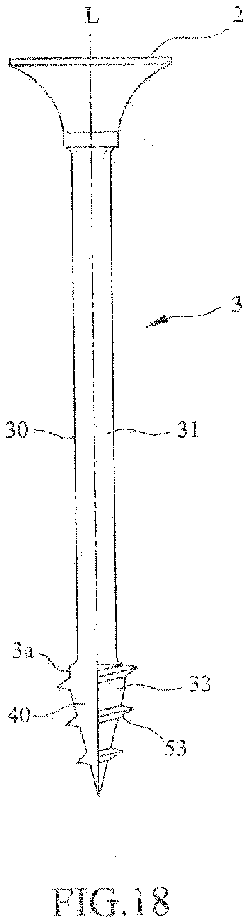

Figure 18 illustrates a screw according to a tenth embodiment of the disclosure. The difference of the tenth embodiment from the first embodiment resides in that the thread unit 5 has only the lower thread 53 formed at the lower section 33; the grooved section 31 has a top end proximate to the head 2 and a bottom end proximate to the leading end 4 of the lower section 33. The top end has the upper groove boundary wall 303, and the bottom end has the lower groove boundary wall 304. The collecting groove 30 therefore has an increased axial length and provides an increased receiving space to collect a larger amount of scraps. This embodiment is suitable for advancing into a larger depth. The groove bottom wall 302 of the collecting groove 30 is deeper than the circumferential surface 3a having the maximum root diameter of the tapered lower thread 53, which is the largest except the the maximum crest diameter of the lower thread 53.

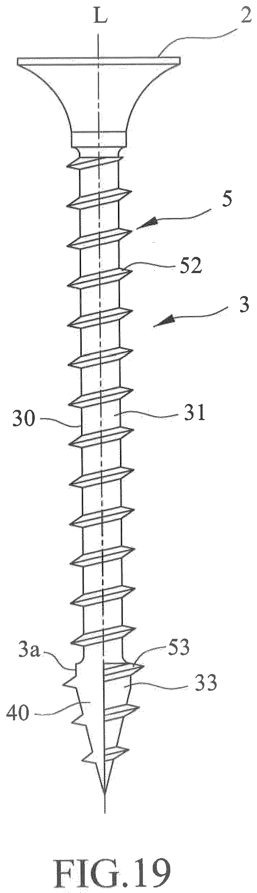

Figure 19 illustrates a screw according to an eleventh embodiment of the disclosure. The difference of the eleventh embodiment from the tenth embodiment resides in that the thread unit 5 additionally has an auxiliary thread 52, which is a straight thread and is formed at the grooved section 31. The auxiliary thread 52 has a root diameter smaller than the maximum root diameter of the lower thread 53. The auxiliary thread 52 can enhance the effect of grasping and securing the workpiece.

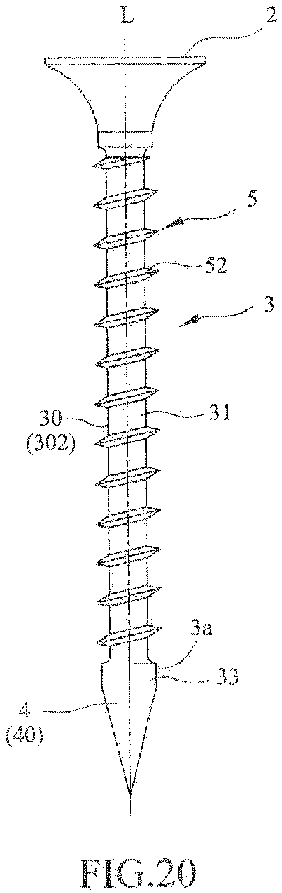

Figure 20 illustrates a variant of the eleventh embodiment. In this variant, the lower thread 53 is omitted from the lower section 33. The groove bottom wall 302 of the collecting groove 30 is deeper than the circumferential surface 3a with the largest diameter of the shank 3, which is the largest except the crest diameter of the auxiliary thread 52.

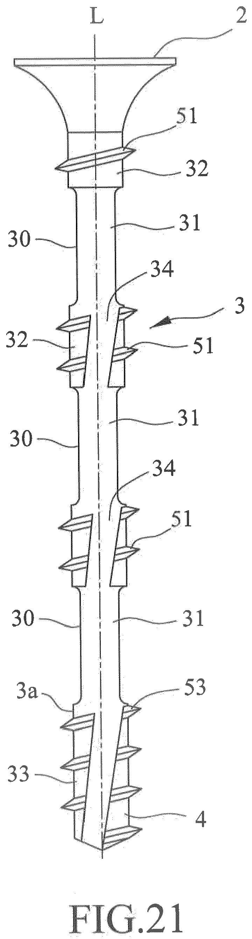

Figure 21 illustrates a screw according to a twelfth embodiment of the disclosure. The difference of the twelfth embodiment from the first embodiment resides in that the twelfth embodiment includes a plurality of grooved sections 31 and a plurality of the upper sections 32 each formed with the upper thread 51 of the thread unit 5, and a plurality of trenches 34. In this embodiment, the grooved sections 31 are axially spaced apart from each other, and each upper section 32 is disposed between two of the grooved sections 31. Each trench 34 extends across the upper thread 51 formed on one of the upper section 32 to communicate with two of the grooved section 31. By virtue of the tranches 34, the collecting grooves 30 can communicate with each other.

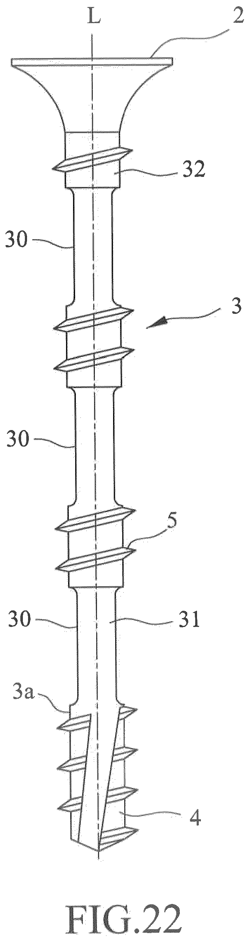

Figure 22 illustrates a screw according to a thirteenth embodiment of the disclosure. The difference of the thirteenth embodiment from the twelfth embodiment resides in that the tranches 34 are omitted. As such, the collecting grooves 30 are disconnected from each other.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A screw with
a head(2);
a shank (3) extending axially and downwardly from said head (2), and including a leading end (4) opposite to said head (2), and a thread unit (5) extending helically around an axis (L) of said shank (3); and
at least one collecting groove (30) that is disposed on said shank (3) between said leading end (4) and said head (2) for collecting scraps and that does not criss-cross with crests of said thread unit (5);
wherein said leading end (4) has at least one flute (40) to communicate with said at least one collecting groove (30);
wherein said at least one collecting groove (30) extends non-helically above said at least one flute (40), said at least one collecting groove (30) defining a groove open end (301) that faces in a radially outwards direction, a groove bottom wall (302) opposite to said groove open end (301), and an upper groove boundary wall (303) that extends from an upper end of said groove bottom wall (302) to said groove open end (301) and that extends around the axis (L) of said shank (3) in a non-helical manner;
wherein said shank (3) includes a portion with a circumferential surface (3a) which has a largest diameter of said shank (3) except a crest diameter of said thread unit (5), said groove bottom wall (302) of said least one collecting groove (30) being deeper in a radial direction than said circumferential surface (3a) when measured from crests of said thread unit (5); wherein said shank (3) further includes at least one grooved section (31) extending circumferentially and having said at least one collecting groove (30), at least one upper section (32) disposed between said at least one grooved section (31) and said head (2), and a lower section (33) disposed below said at least one grooved section (31) and having said leading end (4);
**characterized in that**
said thread unit (5) has a lower thread (53) disposed at said lower section (33); and wherein said leading end (4) is tapered and has a pointed tip, said lower thread (53) extending helically toward said pointed tip of said leading end (4), said at least one flute (40) extending across said lower thread (53) and having a flute upper end that meets and communicates said at least one collecting groove (30) and a flute lower end that meets said pointed tip, said flute upper end being larger than said flute lower end.

2. The screw as claimed in Claim 1, wherein said at least one collecting groove (30) further defines a lower groove boundary wall (304) that extends from a lower end of said groove bottom wall (302) to said groove open end (301) and that extends around the axis (L) of said shank (3) in a non-helical manner.

3. The screw as claimed in Claim 1, wherein said at least one collecting groove (30) extends continuously around the axis (L) of said shank (3) by an angle of 360 degrees.

4. The screw as claimed in Claim 1, wherein said at least one collecting groove (30) is more proximate to said leading end (4) than said head (2).

5. The screw as claimed in Claim 1, wherein said at least one collecting groove (30) is indented inwardly in a stepped manner.

6. The screw as claimed in Claim 1, wherein said at least one collecting groove (30) is indented gradually and inwardly.

7. The screw as claimed in Claim 1, wherein said thread unit (5) has an upper thread (51) disposed at said at least one upper section (32).

8. The screw as claimed in Claim 1, wherein said at least one flute (40) of said lower section (33) extends in parallel with the axis (L) of said shank (3).

9. The screw as claimed in Claim 1, further **characterized by** at least one rib (62) protruding radially and outwardly from said shank and extending transversely between two consecutive crests of said thread unit (5).

10. The screw as claimed in Claim 1, further **characterized by** at least one rib (62) protruding radially and outwardly and extending transversely between two consecutive crests of said thread unit (5) formed in said leading end (4), said at least one flute (40) of said leading end (4) extending across said consecutive crests and adjoining said at least one collecting groove (30).

11. The screw as claimed in Claim 1, further **characterized by** a reverse thread (63) formed on said shank (3) and extending spirally in a reverse direction that is opposite to the direction of said thread unit (5).

12. The screw as claimed in Claim 11, wherein said at least one flute (40) of said leading end (4) extends across said reverse thread (63) and connects said collecting groove (30).

## Patentansprüche

1. Eine Schraube mit folgenden Merkmalen:
einem Kopf (2)
einem Schaft (3), der sich axial und nach unten von dem genannten Kopf (2) weg erstreckt und ein Vorderende (4) gegenüber von dem genannten Kopf (2) umfasst, und eine Gewindeeinheit (5), die sich auf gewundene Weise um eine Achse (L) des genannten Schafts (3) erstreckt; und
zumindest einer Sammelrille (30), die auf dem genannten Schaft (3) zwischen dem genannten Vorderende (4) und dem genannten Kopf (2) angeordnet ist, um Abfall zu sammeln, und die sich nicht mit Scheiteln der genannten Gewindeeinheit (5) kreuzt;
wobei das genannte Vorderende (4) zumindest eine Nut (40) aufweist, um mit der genannten zumindest einen Sammelrille (30) in Verbindung zu stehen;
wobei sich die genannte zumindest eine Sammelrille (30) auf eine nicht gewundene Weise über der genannten zumindest einen Nut (40) erstreckt, wobei die genannte zumindest eine Sammelrille (30) ein offenes Rillenende (301), das in einer Richtung radial nach außen gerichtet ist, eine untere Rillenwand (302) gegenüber dem genannten offenen Rillenende (301) und eine obere Rillenbegrenzungswand (303) definiert, die sich von einem oberen Ende der genannten Rillenbegrenzungswand (302) zu dem genannten offenen Rillenende (301) erstreckt und die sich auf eine nicht gewundene Weise um die Achse (L) des genannten Schafts (3) erstreckt;
wobei der genannte Schaft (3) einen Teil mit einer Umfangsoberfläche (3a) umfasst, der einen größten Durchmesser des genannten Schafts (3) abgesehen von einem Scheiteldurchmesser der genannten Gewindeeinheit (5) aufweist, wobei die genannte untere Rillenwand (302) der genannten zumindest einen Sammelrille (30) tiefer in einer Radialrichtung als die genannte Umfangsoberfläche (3a) ist, bei Messung von den Scheiteln der genannten Gewindeeinheit (5);
wobei der genannte Schaft (3) ferner zumindest einen gerillten Abschnitt (31), der sich in Umfangsrichtung erstreckt und die genannte zumindest eine Sammelrille (30) aufweist, zumindest einen oberen Abschnitt (32), der zwischen dem genannten zumindest einen gerillten Abschnitt (31) und dem genannten Kopf (2) angeordnet ist, und einen unteren Abschnitt (33) umfasst, der unterhalb des genannten zumindest einen gerillten Abschnitts (31) angeordnet ist und das genannte Vorderende (4) aufweist;
**dadurch gekennzeichnet, dass** die genannte Gewindeeinheit (5) ein unteres Gewinde (53) aufweist, das auf dem genannten unteren Abschnitt (33) angeordnet ist; und
wobei sich das genannte Vorderende (4) verjüngt und eine spitz zulaufende Spitze aufweist, sich das genannte untere Gewinde (53) auf gewundene Weise in Richtung der genannten spitz zulaufenden Spitze des genannten Vorderendes (4) erstreckt, sich die genannte zumindest eine Nut (40) über das genannte untere Gewinde (53) erstreckt und ein oberes Nutende, das auf die genannte zumindest eine Sammelrille (30) trifft und mit derselben in Verbindung steht, und ein unteres Nutende aufweist, das auf die genannte spitz zulaufende Spitze trifft, wobei das genannte obere Nutende größer als das genannte untere Nutende ist.

2. Die Schraube gemäß Anspruch 1, wobei die genannte zumindest eine Sammelrille (30) ferner eine untere Rillenbegrenzungswand (304) definiert, die sich von einem unteren Ende der genannten unteren Rillenwand (302) zu dem genannten offenen Rillenende (301) erstreckt und die sich auf eine nicht gewundene Weise um die Achse (L) des genannten Schafts (3) erstreckt.

3. Die Schraube gemäß Anspruch 1, wobei sich die genannte zumindest eine Sammelrille (30) um einen Winkel von 360 Grad fortlaufend um die Achse (L) des genannten Schafts (3) erstreckt.

4. Die Schraube gemäß Anspruch 1, wobei die genannte zumindest eine Sammelrille (30) näher bei dem genannten Vorderende (4) als bei dem genannten Kopf (2) ist.

5. Die Schraube gemäß Anspruch 1, wobei die genannte zumindest eine Sammelrille (30) stufenförmig nach innen vertieft ist.

6. Die Schraube gemäß Anspruch 1, wobei die genannte zumindest eine Sammelrille (30) graduell und nach innen vertieft ist.

7. Die Schraube gemäß Anspruch 1, wobei die genannte Gewindeeinheit (5) ein oberes Gewinde (51) aufweist, das auf dem genannten zumindest einen oberen Abschnitt (32) angeordnet ist.

8. Die Schraube gemäß Anspruch 1, wobei sich die genannte zumindest eine Nut (40) des genannten unteren Abschnitts (33) parallel zu der Achse (L) des genannten Schafts (3) erstreckt.

9. Die Schraube gemäß Anspruch 1, ferner **gekennzeichnet durch** zumindest einen Steg (62), der radial und nach außen von dem genannten Schaft hervorsteht und sich in Querrichtung zwischen zwei aufeinanderfolgenden Scheiteln der genannten Gewindeeinheit (5) erstreckt.

10. Die Schraube gemäß Anspruch 1, ferner **gekennzeichnet durch** zumindest einen Steg (62), der radial und nach außen hervorsteht und sich in Querrichtung zwischen zwei aufeinanderfolgenden Scheiteln der genannten Gewindeeinheit (5) erstreckt, die in dem genannten Vorderende (4) gebildet sind, wobei sich die genannte zumindest eine Nut (40) des genannten Vorderendes (4) über die genannten aufeinanderfolgenden Scheitel erstreckt und an die genannte zumindest eine Sammelrille (30) angrenzt.

11. Die Schraube gemäß Anspruch 1, ferner **gekennzeichnet durch** ein gegenläufiges Gewinde (63), das auf dem genannten Schaft (3) gebildet ist und sich spiralförmig in einer gegenläufigen Richtung erstreckt, die entgegen der Richtung der genannten Gewindeeinheit (5) verläuft.

12. Die Schraube gemäß Anspruch 11, wobei sich die genannte zumindest eine Nut (40) des genannten Vorderendes (4) über das genannte gegenläufige Gewinde (63) erstreckt und die genannte Sammelrille (30) verbindet.

## Revendications

1. Vis pourvue
d'une tête (2) ;
d'une tige (3) s'étendant axialement et vers le bas depuis ladite tête (2), et incluant une extrémité avant (4) opposée à ladite tête (2), et une unité de filetage (5) s'étendant de manière hélicoïdale autour d'un axe (L) de ladite tige (3) ; et
d'au moins une rainure de collecte (30) qui est disposée sur ladite tige (3) entre ladite extrémité avant (4) et ladite tête (2) pour collecter les débris et qui ne s'entrecroise pas avec les crêtes de ladite unité de filetage (5) ;
dans laquelle ladite extrémité avant (4) comporte au moins une goujure (40) pour communiquer avec ladite au moins une rainure de collecte (30) ;
dans laquelle ladite au moins une rainure de collecte (30) s'étend de manière non hélicoïdale au-dessus de ladite au moins une goujure (40) ladite au moins une rainure de collecte (30) définissant une extrémité ouverte de rainure (301) qui est tournée dans une direction radialement vers l'extérieur, une paroi de fond de rainure (302) opposée à ladite extrémité ouverte de rainure (301), et une paroi de limite de rainure supérieure (303) qui s'étend depuis une extrémité supérieure de ladite paroi de fond de rainure (302) jusqu'à ladite extrémité ouverte de rainure (301) et qui s'étend autour de l'axe (L) de ladite tige (3) d'une manière non hélicoïdale ;
dans laquelle ladite tige (3) inclut une partie pourvue d'une surface circonférentielle (3a) qui présente un diamètre le plus grand de ladite tige (3) à l'exception d'un diamètre de crête de ladite unité de filetage (5), ladite paroi de fond de rainure (302) de ladite au moins une rainure de collecte (30) étant plus profonde dans une direction radiale que ladite surface circonférentielle (3a) lorsqu'elle est mesurée depuis des crêtes de ladite unité de filetage (5) ;
dans laquelle ladite tige (3) inclut en outre au moins une section à rainure (31) s'étendant circonférentiellement et comportant ladite au moins une rainure de collecte (30), au moins une section supérieure (32) disposée entre ladite au moins une section à rainure (31) et ladite tête (2), et une section inférieure (33) disposée sous ladite au moins une section à rainure (31) et comportant ladite extrémité avant (4) ;
**caractérisée en ce que** ladite unité de filetage (5) comporte un filet inférieur (53) disposé au niveau de ladite section inférieure (33) ; et
dans laquelle ladite extrémité avant (4) est resserrée et possède une pointe pointue, ledit filet inférieur (53) s'étendant de manière hélicoïdale vers ladite pointe pointue de ladite extrémité avant (4), ladite au moins une goujure (40) s'étendant à travers ledit filet inférieur (53) et comportant une extrémité supérieure de goujure qui rencontre et communique avec ladite au moins une rainure de collecte (30) et une extrémité inférieure de goujure qui rencontre ladite pointe pointue, ladite extrémité supérieure de goujure étant plus grande que ladite extrémité inférieure de goujure.

2. Vis selon la revendication 1, dans laquelle ladite au moins une rainure de collecte (30) définit en outre une paroi de limite de rainure inférieure (304) qui s'étend depuis une extrémité inférieure de ladite paroi de fond de rainure (302) jusqu'à ladite extrémité ouverte de rainure (301) et qui s'étend autour de l'axe (L) de ladite tige (3) d'une manière non hélicoïdale.

3. Vis selon la revendication 1, dans laquelle ladite au moins une rainure de collecte (30) s'étend en continu autour de l'axe (L) de ladite tige (3) d'un angle de 360 degrés.

4. Vis selon la revendication 1, dans laquelle ladite au moins une rainure de collecte (30) est plus proche de ladite extrémité avant (4) que de ladite tête (2).

5. Vis selon la revendication 1, dans laquelle ladite au moins une rainure de collecte (30) est dentelée vers l'intérieur d'une manière étagée.

6. Vis selon la revendication 1, dans laquelle ladite au moins une rainure de collecte (30) est dentelée de manière progressive et vers l'intérieur.

7. Vis selon la revendication 1, dans laquelle ladite unité de filetage (5) comporte un filet supérieur (51) disposé au niveau de ladite au moins une section supérieure (32).

8. Vis selon la revendication 1, dans laquelle ladite au moins une goujure (40) de ladite section inférieure (33) s'étend parallèlement à l'axe (L) de ladite tige (3).

9. Vis selon la revendication 1, **caractérisée en outre par** au moins une nervure (62) faisant saillie radialement et vers l'extérieur depuis ladite tige et s'étendant transversalement entre deux crêtes consécutives de ladite unité de filetage (5).

10. Vis selon la revendication 1, **caractérisée en outre par** au moins une nervure (62) faisant saillie radialement et vers l'extérieur et s'étendant transversalement entre deux crêtes consécutives de ladite unité de filetage (5), formée dans ladite extrémité avant (4), ladite au moins une goujure (40) de ladite extrémité avant (4) s'étendant à travers lesdites crêtes consécutives et étant attenante à ladite au moins une rainure de collecte (30).

11. Vis selon la revendication 1, **caractérisée en outre par** un filet inverse (63) formé sur ladite tige (3) et s'étendant en spirale dans une direction inverse qui est opposée à la direction de ladite unité de filetage (5).

12. Vis selon la revendication 11, dans laquelle ladite au moins une goujure (40) de ladite extrémité avant (4) s'étend à travers ledit filet inverse (63) et est reliée à ladite rainure de collecte (30).
